# EUROPÄISCHE PATENTSCHRIFT

(11) **EP 3 279 492 B1**
(45) Veröffentlichungstag und Bekanntmachung des Hinweises auf die Patenterteilung: **17.11.2021**
(21) Anmeldenummer: 17001212.4
(22) Anmeldetag: 17.07.2017
(51) Int. Cl.: F16D 7/04, F16D 19/00, B25B 13/14, B23Q 1/25, F16D 7/10

(54) **SPANNEINRICHTUNG FÜR WERKZEUGE**
TENSIONING DEVICE FOR TOOLS
DISPOSITIF DE BLOCAGE POUR OUTILS

(30) Priorität: 29.07.2016 DE 102016009431
(43) Veröffentlichungstag der Anmeldung: 07.02.2018
(73) Patentinhaber: Michael Weinig AG, 97941 Tauberbischofsheim (DE)
(72) Erfinder: Wagner, Ralf, 74736 Hardheim (DE); Hofmann, Sebastian, 63874 Dammbach (DE)
(74) Vertreter: Kohl, Karl-Heinz

(56) Entgegenhaltungen:
- DE-A1- 10 101 093
- DE-A1- 10 130 520
- DE-A1-102004 011 738
- DE-A1-102012 213 724
- DE-U1- 29 708 201
- JP-A- H0 970 726

## Beschreibung

Die Erfindung betrifft eine Spanneinrichtung für Werkzeuge nach dem Oberbegriff des Anspruches 1.

Es ist bekannt, Werkzeuge auf einem Spindelzapfen axial zu spannen. Hierfür wird eine Mutter verwendet, die auf dem Spindelzapfen angeordnet ist und mit der das Werkzeug axial gegen einen am Spindelzapfen vorgesehenen Anschlag gedrückt wird. Für den Spannvorgang wird eine Spanneinrichtung in Form eines Kombinationswerkzeuges/Kombischlüssels eingesetzt. Sie hat ein mit einem Hebel verbundenes Kupplungsstück, welches auf den Spindelzapfen formschlüssig aufgesetzt und mit dem der Spindelzapfen um seine Achse gedreht werden kann. Ein zweiter Hebel der bekannten Spanneinrichtung wird mit einer Hohlbuchse/Steckhülse formschlüssig auf die Mutter aufgesetzt. Damit kann die Mutter gedreht werden. Durch die relative Drehung von Mutter und Spindelzapfen wird die Mutter axial gegen das Werkzeug bewegt, das dadurch axial gespannt wird. Die relative Drehung von Mutter und Spindelzapfen erfolgt über die Betätigung der beiden Hebel, die von der Kupplung bzw. Hohlbuche/Steckhülse abstehen. Hierbei muss vom Benutzer eine sehr hohe Kraft aufgewendet werden, um die erforderliche axiale Spannkraft zu erzeugen. Das vom Benutzer aufzuwendende Drehmoment liegt hierbei in der Größenordnung von etwa 80 bis etwa 100 Nm.

Spanneinrichtungen sind aus den Druckschriften JP H09 70726 A und DE 297 08 201 U1 bekannt.

Der Erfindung liegt die Aufgabe zugrunde, die gattungsgemäße Spanneinrichtung so auszubilden, dass das zur axialen Spannung des Werkzeuges auf dem Spindelzapfen erforderliche Moment leicht aufgebracht werden kann.

Diese Aufgabe wird bei der gattungsgemäßen Spanneinrichtung erfindungsgemäß mit den kennzeichnenden Merkmalen des Anspruches 1 gelöst.

Bei der erfindungsgemäßen Spanneinrichtung ist das Kupplungsstück mit der Abtriebswelle drehfest verbunden. Sie ist über das Übersetzungsgetriebe mit der Antriebswelle antriebsverbunden. Dadurch ist es möglich, dass die Antriebswelle der Spanneinrichtung mit nur geringem Moment gedreht werden muss, um die hohe, zur Axialspannung des Werkzeuges erforderliche Spannkraft aufzubringen. Während bei den herkömmlichen Spanneinrichtungen ein Drehmoment im Bereich von etwa 80 bis 100 Nm notwendig ist, ist hierfür bei der erfindungsgemäßen Spanneinrichtung nur ein Drehmoment von etwa 2 Nm erforderlich. Das Übersetzungsgetriebe sorgt dafür, dass das aufzuwendende geringe Drehmoment in die hohe axiale Spannkraft zum Spannen des Werkzeuges umgesetzt wird.

Das Übersetzungsgetriebe ist vorteilhaft ein Planetengetriebe, das nicht nur kompakt ausgebildet ist, sondern auch eine sehr hohe Übersetzung ermöglicht, beispielsweise von etwa 1:50. Die kompakte Ausbildung des Planetengetriebes ermöglicht es, die Spanneinrichtung handlich auszubilden, so dass sie vom Benutzer problemlos gehandhabt werden kann.

Das Übersetzungsgetriebe kann auch zwei- oder mehrstufig ausgebildet sein, so dass je nach Anwendungsfall sehr hohe Übersetzungen erreicht werden können.

Die Drehmomentkopplung ist bei einer vorteilhaften Ausführungsform eine Hohlbuchse, die mit wenigstens einer Abflachung versehen ist. Mit ihr liegt die Hohlbuchse an einer entsprechenden Abflachung der Mutter an, so dass diese mit der Hohlbuchse drehfest verbunden ist.

Die Drehmomentkopplung umgibt das Kupplungsstück mit ausreichendem Spiel, so dass die Drehbewegung des Kupplungsstückes beim Spannvorgang durch die Hohlbuchse nicht behindert wird.

Bei einer vorteilhaften Ausführung ist die Betätigungseinheit zum Drehen der Antriebswelle ein Handrad. Da der Benutzer keine hohen Kräfte aufbringen muss, kann er das Handrad leicht drehen. Anstelle des Handrades kann auch jede andere geeignete Betätigungseinheit verwendet werden, z.B. ein elektromotorischer Antrieb.

Zur Erleichterung des Drehens ist das Handrad vorteilhaft mit einer Kurbel versehen.

Damit bei der Axialspannung des Werkzeuges eine definierte, für die sichere Spannung ausreichende axiale Kraft, jedoch auch keine zu hohe Spannkraft erzeugt wird, ist es von Vorteil, wenn das Handrad über eine Rutschkupplung mit der Antriebswelle verbunden ist. Solange die axiale Spannkraft zum Spannen des Werkzeuges noch nicht erreicht ist, wird die Antriebswelle durch das Handrad gedreht. Ist die axiale Spannkraft erreicht, sorgt die Rutschkupplung dafür, dass das Handrad gegenüber der Antriebswelle dreht und kein Drehmoment mehr auf die Antriebswelle ausübt.

Bei einer bevorzugten Ausführungsform weist die Rutschkupplung eine auf der Antriebswelle drehfest sitzende Nabe auf, an der wenigstens ein Druckbolzen unter Federkraft anliegt. Mittels des Druckbolzens wird beim Drehen des Handrades die Nabe und damit die Antriebswelle um ihre Achse gedreht, so dass der Spannvorgang durchgeführt werden kann.

Eine zuverlässige Drehmomentübertragung wird in vorteilhafter Weise erreicht, wenn der Druckbolzen an einer Abflachung auf der Außenseite der Nabe anliegt. Über diese Abflachung erfolgt die Drehmitnahme der Nabe und damit der Antriebswelle, wenn das Handrad um seine Achse gedreht wird.

Um eine einwandfreie Drehmomentübertragung zu erreichen, ist es von Vorteil, wenn die Abflachung durch den Boden einer am Außenmantel der Nabe befindlichen Vertiefung gebildet ist.

Die auf den Druckbolzen wirkende Federkraft ist in vorteilhafter Weise einstellbar. Dadurch kann das Drehmoment zum Spannen des Werkzeuges eingestellt werden.

Durch die Vertiefung im Außenmantel der Nabe wird eine in Umfangsrichtung liegende Begrenzungswand gebildet, an welcher der Druckbolzen dann zur Anlage kommt, wenn das Handrad zum Lösen der Axialverspannung in umgekehrter Richtung gedreht werden muss. Über diese Begrenzungswand kann dann das volle Drehmoment ohne Wirkung der Rutschkupplung auf die Antriebswelle übertragen werden, so dass sich das Werkzeug problemlos lösen lässt.

Eine vorteilhafte und zuverlässig arbeitende Ausbildung ergibt sich, wenn der Druckbolzen in einer Führungsbuchse verschiebbar geführt ist, die im Handrad untergebracht ist und mindestens eine Druckfeder aufnimmt, mit welcher der Druckbolzen in Richtung auf die Nabe belastet ist. In der Führungsbuchse sind somit der Druckbolzen sowie die Druckfeder vor Beschädigung und/oder Verschmutzung geschützt. Zudem wird durch die Führungsbuchse gewährleistet, dass der Druckbolzen exakt ausgerichtet auf die Abflachung der Nabe trifft.

Die Kraft der Druckfeder kann vorteilhaft stufenlos eingestellt werden, wenn in die Führungsbuchse eine Einstellschraube für die Druckfeder geschraubt ist. Sie hält nicht nur die Druckfeder in der Führungsbuchse, sondern mit ihr kann die Federkraft einfach eingestellt und an den Anwendungsfall angepasst werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

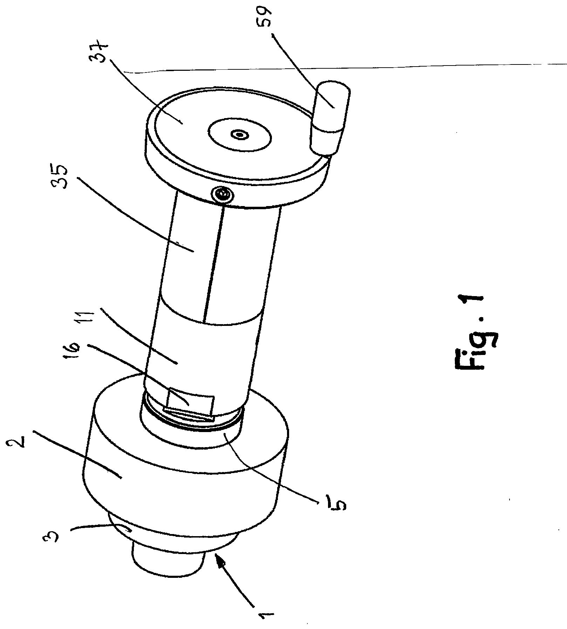

Die Erfindung wird anhand eines in den Zeichnungen dargestellten Ausführungsbeispieles näher erläutert. Es zeigen
- Fig. 1: in perspektivischer Darstellung eine erfindungsgemäße Spanneinrichtung,
- Fig. 2: die erfindungsgemäße Spanneinrichtung in Explosivdarstellung,

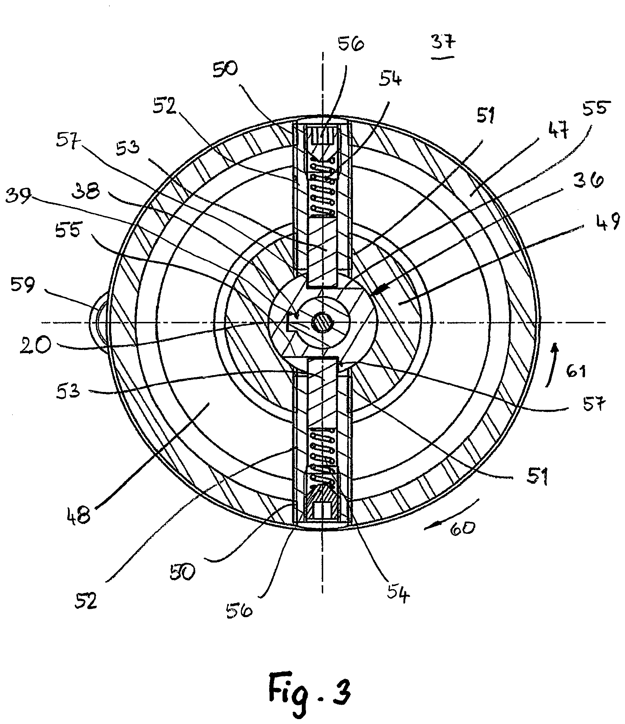

- Fig. 3: in vergrößerter Darstellung einen Schnitt längs der Linie III-III in Fig. 4,
- Fig. 4: einen Axialschnitt durch die erfindungsgemäße Spanneinrichtung, die an einen ein Werkzeug tragenden Spindelzapfen angeschlossen ist.

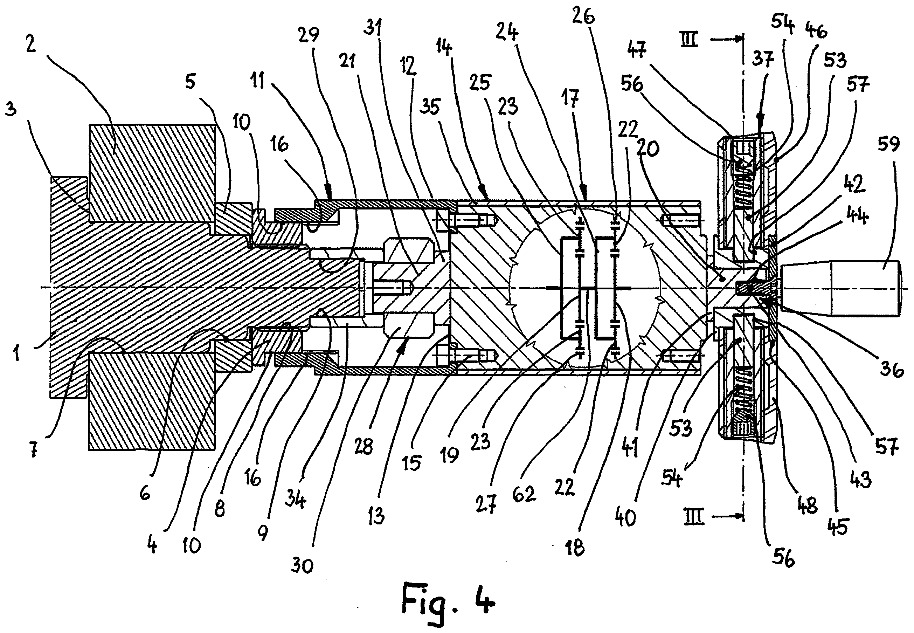

Wie Fig. 4 zeigt, sitzt auf einem Spindelzapfen 1 ein Werkzeug 2. Der Spindelzapfen 1 bildet eine Werkzeugaufnahme, auf der das Werkzeug axial gespannt wird. Hierzu ist der Spindelzapfen 1 mit einem Axialanschlag 3 versehen, an dem das Werkzeug 2 anliegt. Der Axialanschlag 3 wird beispielhaft durch eine Radialschulter gebildet, die am Spindelzapfen 1 vorgesehen ist. Der axiale Anschlag für das Werkzeug 2 kann abweichend von der dargestellten Ausführungsform jede Ausbildung haben. Die Werkzeugaufnahme ist Bestandteil einer Spindel, beispielsweise einer Frässpindel, die in bekannter Weise in einem Maschinengehäuse drehbar gelagert ist und motorisch angetrieben wird. Mit dem Werkzeug 2 werden in Holzbearbeitungsmaschinen, insbesondere Kehlmaschinen, Werkstücke bearbeitet, die insbesondere aus Holz, Kunststoff und dergleichen bestehen. Das Werkzeug 2 kann ein Profilierwerkzeug sein, mit dem beispielsweise in Kehlmaschinen oder auf Tischfräsen Profile an Werkstücken, insbesondere an länglichen Holzwerkstücken, gefräst werden. Das Werkzeug 2 kann aber beispielsweise auch ein Hobelwerkzeug sein, mit dem die Oberseite des Werkstückes gerade gehobelt wird.

Das Werkzeug 2 wird mit einer Mutter 4 unter Zwischenlage eines Sicherungsringes 5 gegen den Axialanschlag 3 gedrückt.

Der Sicherungsring 5 sitzt auf einer zylindrischen Mantelfläche 6 des Spindelzapfens 1, die im Ausführungsbeispiel kleineren Durchmesser hat als eine zylindrische Mantelfläche 7, auf der das Werkzeug 2 sitzt. Damit das Werkzeug 2 zuverlässig axial gespannt werden kann, steht es axial in Richtung auf den Sicherungsring 5 über die Mantelfläche 7 vor. In gleicher Weise ragt auch der Sicherungsring 5 axial über die Mantelfläche 6. Der Sicherungsring 5 hat in bekannter Weise eine formschlüssige Drehverbindung zum Spindelzapfen 1, beispielsweise einen nicht dargestellten Flachkant, eine Nut- und Zapfenverbindung oder ähnliches. Damit dient er als Sicherung, dass sich die Mutter 4 nicht lösen kann, wenn vom Werkzeug 2 ein Drehmoment aufgrund von Schnitt- oder Massenträgheitskräften wirkt.

Die Mutter 4 sitzt auf einem Gewindeabschnitt 8 des Spindelzapfens 1. Der Gewindeabschnitt 8 hat kleineren Durchmesser als die Mantelfläche 6, damit das Werkzeug 2 und der Sicherungsring 5 montiert werden können.

Der Spindelzapfen 1 ragt axial über die Mutter 4 und ist in diesem Bereich mit einem Außenmehrkant 9, beispielsweise einem Sechskant, versehen.

Die Mutter 4 ist an ihrer zylindrischen Außenseite mit wenigstens einer Abflachung 10 versehen. Vorteilhaft weist die Mutter 4 an ihrer Außenseite 2 diametral einander gegenüber liegende Abflachungen 10 oder einen Sechskant auf.

Zur Spannung des Werkzeuges 2 zwischen dem Axialanschlag 3 und dem Sicherungsring 5 wird durch das Anziehen der Mutter 4 eine axiale Spannkraft erzeugt. Dafür wird auf die Mutter 4 die Spanneinrichtung so aufgesetzt, dass beim Spannvorgang eine Relativdrehung zwischen der Mutter 4 und dem Spindelzapfen 1 stattfindet. Im Ausführungsbeispiel wird die Mutter 4 in noch zu beschreibender Weise gegen Drehen festgehalten und der Spindelzapfen 1 gedreht. Die Spanneinrichtung ist so ausgebildet, dass das zur Aufbringung der axialen Spannkraft erforderliche Drehmoment einfach erzeugt werden kann. Dies erfolgt in vorteilhafter Weise im Ausführungsbeispiel vom Benutzer der Spanneinrichtung selbst, kann aber auch elektromotorisch oder über eine andere Energieform aufgebracht werden.

Die Spanneinrichtung hat eine Hohlbuchse 11, die an einem Ende einen radial nach innen gerichteten schmalen Flansch 12 aufweist (Fig. 4), mit dem sie an der Stirnseite 13 eines Getriebegehäuses 14 anliegt. Die Hohlbuchse 11 ist mittels über den Umfang des Ringflansches 12 verteilt angeordneter Schrauben 15 an der Stirnseite 13 des Getriebegehäuses 14 anliegend lösbar mit dem Getriebegehäuse verbunden.

Die Hohlbuchse 11 weist an ihrem freien Ende diametral einander gegenüberliegend zwei Abflachungen 16 auf, mit denen die Hohlbuchse 11 bei der Spannung des Werkzeuges 2 auf den Abflachungen 10 der Mutter 4 aufliegt. Im Übrigen ist die Hohlbuchse 11 zylindrisch ausgebildet.

Im Getriebegehäuse 14 ist ein Übersetzungsgetriebe 17 untergebracht, das in Fig. 4 lediglich schematisch dargestellt ist. Es ist vorteilhaft ein Planetengetriebe, mit dem bei kompakter Ausbildung ein hoher Übersetzungsgrad möglich ist. Im dargestellten Ausführungsbeispiel wird ein zweistufiges Planetengetriebe eingesetzt. Es hat die beiden Sonnenräder 18, 19, die auf einer Antriebswelle 20 bzw. einer Zwischenwelle 62 drehfest sitzen. Mit den Sonnenrädern 18, 19 kämmen Planetenräder 22, 23, die auf Planetenträgern 24, 25 sitzen und in Hohlräder 26, 27 eingreifen, die drehfest an der Innenseite des Getriebegehäuses 14 vorgesehen sind. Die Zwischenwelle 62 ist Bestandteil des Planetenträgers 24 bzw. fest mit diesem verbunden.

Die Abtriebswelle 21 ist Bestandteil des Planetenträgers 25.bzw. fest mit diesem verbunden.

Über das Übersetzungsgetriebe 17 ist die Antriebswelle 20 mit der Abtriebswelle 21 antriebsverbunden.

Die Antriebswelle 20 sowie die Abtriebswelle 21 sind in bekannter Weise im Getriebegehäuse 14 drehbar gelagert.

Die Abtriebswelle 21 ragt aus dem Getriebegehäuse 14 in die Hohlbuchse 11, welche die Abtriebswelle 21 mit Abstand umgibt. Auf dem überstehenden Ende der Abtriebswelle 21 sitzt drehfest ein Kupplungsstück 28, das mit einem Innenmehrkant 29, vorzugsweise einem Sechskant, für den Spannvorgang auf den Außenmehrkant 9 am freien Ende des Spindelzapfens 1 geschoben wird (Fig. 4).

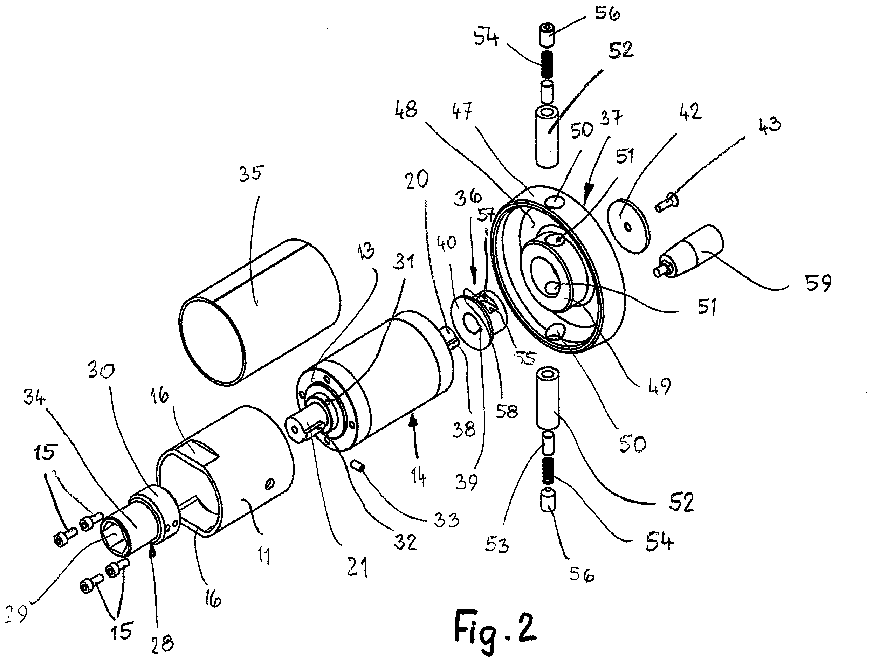

Das Kupplungsstück 28 hat an einem Ende einen zylindrischen Ring 30, der an einer Ringschulter 31 der Abtriebswelle 21 anliegt (Fig. 2 und 4). Die drehfeste Verbindung zwischen dem Kupplungsstück 28 und der Abtriebswelle 21 wird vorteilhaft durch eine Feder 32 der Abtriebswelle 21 erreicht, die in eine entsprechende Axialnut in der Innenwand des Ringes 30 des Kupplungsstückes 28 eingreift. Das Kupplungsstück 28 sitzt axial gesichert auf der Abtriebswelle 21. Beispielsweise kann das Kupplungsstück 28 mittels wenigstens einer Stiftschraube 33 (Fig. 2) auf der Abtriebswelle 21 gesichert sein.

An den Ring 30 schließt eine Hülse 34 an, welche mit dem inneren Mehrkant 29 versehen ist. Der Ring 30 und die Hülse 34 sind vorteilhaft einstückig ausgebildet, können aber auch miteinander verschweißt sein.

Das Getriebegehäuse 14 ist vorteilhaft mit einer Ummantelung 35 versehen, die beispielsweise aus Moosgummi besteht und eine sichere Handhabung der Spanneinrichtung für den Benutzer gewährleistet.

Auf dem aus dem Getriebegehäuse 14 vorstehenden Ende der Antriebswelle 20 sitzt drehfest eine Rastnabe 36, die mit einem Handrad 37 gedreht werden kann. Gemäß Fig. 4 stehen die Antriebswelle 20 und die Abtriebswelle 21 über die einander gegenüberliegenden Stirnseiten des Getriebegehäuses 14 vor.

Zur drehfesten Verbindung ist die Antriebswelle 20 mit einer Feder 38 versehen, die in eine entsprechende Nut 39 an der Innenwand der Rastnabe 36 eingreift (Fig. 2). Die Rastnabe 36 weist einen endseitigen Ringflansch 40 auf, der an einem Ringflansch 41 der Antriebswelle 20 anliegt (Fig. 4).

Zur Axialsicherung der Rastnabe 36 auf der Antriebswelle 20 dient eine Sicherungsscheibe 42, die mittels einer Befestigungsschraube 43 an der Stirnseite der Antriebswelle 20 gehalten ist. Die Befestigungsschraube 43 wird in eine zentrale stirnseitige Gewindebohrung 44 der Antriebswelle 20 geschraubt.

Die Sicherungsscheibe 42 greift mit ihrem Rand in eine Vertiefung 45 in der vom Getriebegehäuse 14 abgewandten Außenseite 46 des Handrades 37 ein. Dadurch wird auch das Handrad 37 durch die Sicherungsscheibe 42 axial gesichert. Vorteilhaft liegt die Sicherungsscheibe 42 vertieft in der Vertiefung 45, so dass sie beim Drehen des Handrades 37 nicht stört.

Das Handrad 37 hat einen zylindrischen Außenmantel 47, der über einen radialen Boden 48 mit einem koaxial zu ihm verlaufenden inneren Ring 49 verbunden ist. Der Außenmantel 47, der Boden 48 und der Ring 49 sind vorteilhaft einstückig miteinander ausgebildet.

Der Außenmantel 47 und der Ring 49 werden an zwei diametral einander gegenüberliegenden Bereichen von jeweils einer Öffnung 50, 51 durchsetzt. Die Öffnungen 50, 51 liegen fluchtend zueinander.

Durch die Öffnungen 50, 51 wird jeweils eine Führungsbuchse 52 eingesetzt. Die Führungsbuchsen 52 können lösbar, aber auch unlösbar mit dem Handrad 37 verbunden werden. Im Ausführungsbeispiel sind sie mit einem Außengewinde versehen und in entsprechende Gewinde der Öffnungen 50, 51 geschraubt. Die Führungsbuchsen 52 sind so weit eingesetzt bzw. eingeschraubt, dass sie nicht über die Außenseite des Mantels 47 bzw. die Innenseite des Ringes 49 des Handrades 37 vorstehen.

In den Führungsbuchsen 52 ist jeweils ein Druckbolzen 53 geführt, der an der Innenwand der Führungsbuchse 52 anliegt und unter der Kraft wenigstens einer Druckfeder 54 radial nach innen belastet wird. Der Druckbolzen 53 steht radial nach innen über die Führungsbuchse 52 vor und liegt mit seiner Stirnseite jeweils an einer ebenen Anlagefläche 55 an, die an der Außenseite der Rastnabe 36 diametral einander gegenüberliegend vorgesehen sind.

Innerhalb der Führungsbuchsen 52 sind die Druckfedern 54 durch eine Einstellschraube 56 gesichert, die in das radial äußere Ende der Führungsbuchsen 52 geschraubt werden. Mit den Einstellschrauben 56 kann die von der Druckfeder 54 auf den Druckbolzen 53 ausgeübte Kraft stufenlos eingestellt werden.

Die ebenen Anlageflächen 55 bilden den Boden von Vertiefungen 57, die diametral einander gegenüberliegend am Außenmantel der Rastnabe 36 vorgesehen sind. Die Anlageflächen 55 werden seitlich von einer senkrecht zu ihnen verlaufenden Seitenwand 58 begrenzt. Die Breite der Vertiefungen 57 ist etwas größer als der Durchmesser der Druckbolzen 53, der dadurch in Radialrichtung der Rastnabe 36 in der Vertiefung 57 beweglich ist. Die Anlageflächen 55 erstrecken sich bis zum Außenmantel der Rastnabe 36.

Um das Handrad 37 einfach drehen zu können, ist es an seiner Außenseite 46 mit einer Kurbel 59 versehen.

Um das Werkzeug 2 axial zu spannen, wird die Hohlbuchse 11 der Spanneinrichtung so auf die Mutter 4 aufgesetzt, dass die Abflachungen 10 der Hohlbuchse 11 auf die Abflachungen 10 der Mutter 4 gelangen. Diese formschlüssige, drehfeste Drehmomentkopplung hindert die Mutter 4 daran, sich relativ zur Hohlbuchse 11 bzw. der Spanneinrichtung zu drehen. Bei diesem Aufsteckvorgang gelangt der Außenmehrkant 9 des Spindelzapfens 1 in den Innenmehrkant 29 des Kupplungsstückes 28. Diese Position ist in Fig. 4 dargestellt. Mit der Kurbel 59 wird das Handrad 37 in Pfeilrichtung 60 (Fig. 4) gedreht. Über die Druckbolzen 53 wird das Drehmoment vom Handrad 37 über die Anlageflächen 55 auf die Rastnabe 36 und damit auf die Antriebswelle 20 übertragen. Über das Übersetzungsgetriebe 17 wird die Abtriebswelle 21 und damit das Kupplungsstück 28 um ihre Achse gedreht. Dies hat zur Folge, dass der Spindelzapfen 1 um seine Achse gedreht wird. Da die Mutter 4 mit der Hohlbuchse 11 und der von Hand gehaltenen Spanneinrichtung formschlüssig drehverbunden ist, erfolgt eine relative Drehung zwischen Mutter 4 und Spindelzapfen 1. Dadurch erfährt die Mutter 4 über das Gewinde 8 eine Axialbewegung in Richtung auf das Werkzeug 2, wodurch der Sicherungsring 5 gegen das Werkzeug 2 gedrückt wird. Es wird dadurch zwischen dem Axialanschlag 3 und dem Sicherungsring 5 axial gespannt.

Durch das Festhalten der Spanneinrichtung durch den Benutzer wird die Mutter 4 quasi am Drehen gehindert. Zum Festhalten muss ebenfalls nur das geringe, über die Kurbel 59 eingeleitete Drehmoment aufgewendet werden.

In manchen Fällen kann der Spindelzapfen 1 am Drehen gehindert sein, wenn beispielsweise die Frässpindel durch eine Motorbremse gehalten ist. Dann dreht sich die Spanneinrichtung zusammen mit der Mutter 4 aufgrund der notwenigen Relativdrehung von Mutter 4 und Spindelzapfen 1b beim Anziehen der Mutter.

Da die Mutter 4 von Hand auf das Gewinde 8 des Spindelzapfens 1 geschraubt wird, bis diese am Sicherungsring 5 zur Anlage kommt, ist die Relativdrehung sehr gering.

Infolge des Übersetzungsgetriebes 17 muss der Anwender der Spanneinrichtung keine hohen Kräfte aufbringen, um das Werkzeug 2 mit der erforderlichen Axialkraft zu spannen. So muss der Anwender lediglich ein Moment von etwa 2 Nm beim Drehen des Handrades 37 aufbringen, um das Werkzeug 2 in gefordertem Maße axial zu spannen. Das Übersetzungsgetriebe ist beispielhaft derart vorgesehen und eingebaut, dass die Drehzahl der Abtriebswelle im Verhältnis 1:50 im Vergleich zur Antriebwelle reduziert wird. Dadurch ergibt sich eine Momentenerhöhung im Verhältnis 50:1 und damit ein Abtriebs- bzw. Spannmoment von etwa 100 Nm. Das Übersetzungsverhältnis kann je nach der erforderlichen Spannkraft hiervon auch abweichen.

Mit Hilfe der Druckfedern 54 lässt sich die axiale Spannkraft für das Werkzeug 2 sehr genau einstellen. Ist die erforderliche Axialkraft zum Einspannen des Werkzeuges 2 erreicht, führt ein weiteres Drehen des Handrades 37 dazu, dass die Druckbolzen 53 auf den Anlageflächen 55 so weit nach außen rutschen, dass sie auf den zylindrischen Außenmantel der Rastnabe 36 gelangen. Dann wird kein Drehmoment mehr vom Handrad 37 auf die Rastnabe 36 und damit auf die Antriebswelle 20 übertragen. Die Druckbolzen 53 im Zusammenwirken mit der Rastnabe 36 bilden somit eine Art Rutschkupplung, die sicherstellt, dass die Mutter 4 mit einem definierten Moment angezogen und damit das Werkzeug 2 mit einer definierten axialen Spannkraft gespannt wird.

Um die Axialspannung des Werkzeuges 2 zu lösen, wird das Handrad 37 in Löserichtung 61 (Fig. 4) gedreht. Die Druckbolzen 53 liegen dann an dem quer zur Drehrichtung liegenden Teil der Seitenwand 58 an. Diese Stellung zeigt Fig. 4. Dadurch wird beim Lösevorgang das volle Drehmoment vom Handrad 37 über die Druckbolzen 53 auf die Rastnabe 36 bzw. die Antriebswelle 20 übertragen, das heißt ohne die Wirkung der Rutschkupplung. Das Werkzeug 2 wird auf diese Weise sicher gelöst.

Anstelle der beschriebenen Ausführungsform sind auch andere Arten von Rutschkupplungen oder Einrichtungen zur Begrenzung des Drehmomentes möglich. Ebenso können andere Arten von Getrieben anstelle des beschriebenen 2-stufigen Planetengetriebes eingesetzt werden.

## Patentansprüche

1. Spanneinrichtung zum Aufstecken auf eine auf einem Spindelzapfen (1) sitzende Mutter (4) zum axialen Spannen eines auf dem Spindelzapfen (1) sitzenden Werkzeuges (2) mittels der Mutter (4), mit einem mit wenigstens einer Betätigungseinheit (37) versehenen Kupplungsstück (28) und mit einer Drehmomentkupplung (11) für die Mutter (4), **dadurch gekennzeichnet, dass** das Kupplungsstück (28) mit einer Abtriebswelle (21) drehfest verbunden ist, die über ein Übersetzungsgetriebe (17) mit einer Antriebswelle (20) antriebsverbunden ist, die mit der Betätigungseinheit (37) drehfest verbunden ist.

2. Spanneinrichtung nach Anspruch 1,
**dadurch gekennzeichnet, dass** das Übersetzungsgetriebe (17) ein Planetengetriebe ist.

3. Spanneinrichtung nach Anspruch 1 oder 2,
**dadurch gekennzeichnet, dass** die Drehmomentkopplung (11) eine Hohlbuchse ist, die mit wenigstens einer Abflachung (16) zur Anlage an wenigstens einer Abflachung (10) der Mutter (4) versehen ist.

4. Spanneinrichtung nach einem der Ansprüche 1 bis3,
**dadurch gekennzeichnet, dass** auf der Antriebswelle (20) als Betätigungseinheit ein Handrad (37) sitzt.

5. Spanneinrichtung nach Anspruch 4,
**dadurch gekennzeichnet, dass** das Handrad (37) über eine Rutschkupplung (36, 53) mit der Antriebswelle (20) verbunden ist.

6. Spanneinrichtung nach Anspruch 5,
**dadurch gekennzeichnet, dass** die Rutschkupplung eine auf der Antriebswelle (20) drehfest sitzende Nabe (36) aufweist, an der wenigstens ein Druckbolzen (53) unter Federkraft anliegt.

7. Spanneinrichtung nach Anspruch 6,
**dadurch gekennzeichnet, dass** der Druckbolzen (53) an einer Abflachung (55) am Außenmantel der Nabe (36) anliegt.

8. Spanneinrichtung nach Anspruch 7,
**dadurch gekennzeichnet, dass** die Abflachung (55) der Boden einer Vertiefung (57) am Außenmantel der Nabe (36) ist.

9. Spanneinrichtung nach einem der Ansprüche 6 bis 8,
**dadurch gekennzeichnet, dass** die Federkraft einstellbar ist.

10. Spanneinrichtung nach einem der Ansprüche 6 bis 9,
**dadurch gekennzeichnet, dass** der Druckbolzen (53) in einer Führungsbuchse (52) verschiebbar geführt ist, die im Handrad (37) untergebracht ist und mindestens eine Druckfeder (54) aufnimmt, mit der der Druckbolzen (53) in Richtung auf die Nabe (36) belastet ist.

11. Spanneinrichtung nach Anspruch 10,
**dadurch gekennzeichnet, dass** in die Führungsbuchse (52) eine Einstellschraube (56) für die Druckfeder (54) geschraubt ist.

12. Verwendung einer Spanneinrichtung nach einem der Ansprüche 1 bis 11 zum Spannen von Werkzeugen von Holzbearbeitungsmaschinen, insbesondere von Kehlmaschinen

## Claims

1. Tensioning device for placement on a nut (4) seated on a spindle journal (1) for axially tensioning a tool (2) seated on the spindle journal (1) by means of the nut (4), comprising a coupling piece (28) provided with at least one actuating unit (37) and comprising a torque coupling (11) for the nut (4),
**characterized in that** the coupling piece (28) is non-rotatably connected to an output shaft (21) which is operatively connected via a transmission gear (17) to a drive shaft (20) which is non-rotatably connected to the actuating unit (37).

2. Tensioning device according to Claim 1, **characterized in that** the transmission gear (17) is a planetary gear.

3. Tensioning device according to Claim 1 or 2, **characterized in that** the torque coupling (11) is a hollow bushing provided with at least one flat portion (16) for abutment against a flat portion (10) of the nut (4).

4. Tensioning device according to one of Claims 1 to 3, **characterized in that** a hand wheel (37) is seated on the drive shaft (20) as actuating unit.

5. Tensioning device according to Claim 4, **characterized in that** the hand wheel (37) is connected to the drive shaft (20) via a slip clutch (36, 53).

6. Tensioning device according to Claim 5, **characterized in that** the slip clutch comprises a hub (36) seated non-rotatably on the drive shaft (20) on which at least one pressure bolt (53) rests under spring force.

7. Tensioning device according to Claim 6, **characterized in that** the pressure bolt (53) rests on a flat portion (55) on the outer jacket of the hub (36).

8. Tensioning device according to Claim 7, **characterized in that** the flat portion (55) is the base of a recess (57) on the outer jacket of the hub (36).

9. Tensioning device according to one of Claims 6 to 8, **characterized in that** the spring force is adjustable.

10. Tensioning device according to one of Claims 6 to 9, **characterized in that** the pressure bolt (53) is guided displaceably in a guide bushing (52) which is accommodated in the hand wheel (37) and receives at least one pressure spring (54) by means of which the pressure bolt (53) is loaded in the direction to the hub (36).

11. Tensioning device according to Claim 10, **characterized in that** an adjusting screw (56) for the pressure spring (54) is screwed into the guide bushing (52).

12. Use of a tensioning device according to one of Claims 1 to 11 for tensioning workpieces of wood working machines, in particular of moulder machines.

## Revendications

1. Dispositif de blocage, destiné à être emboîté sur un écrou (4) logé sur un tourillon de broche (1), pour le blocage axial d'un outil (2) logé sur le tourillon de broche (1) au moyen de l'écrou (4), doté d'une pièce d'accouplement (28) munie d'au moins une unité d'actionnement (37) et doté d'un coupleur (11) pour l'écrou (4),
**caractérisé en ce que** la pièce d'accouplement (28) est reliée de manière solidaire en rotation avec un arbre de sortie (21), qui par l'intermédiaire d'un démultiplicateur (17) est relié en entraînement avec un arbre d'entraînement (20) qui est relié de manière solidaire en rotation avec l'unité d'actionnement (37).

2. Dispositif de blocage selon la revendication 1, **caractérisé en ce que** le démultiplicateur (17) est un engrenage planétaire.

3. Dispositif de blocage selon la revendication 1 ou 2, **caractérisé en ce que** le coupleur (11) est un manchon creux qui est muni d'au moins un méplat (16) destiné à être adjacent à au moins un méplat (10) de l'écrou (4).

4. Dispositif de blocage selon l'une quelconque des revendications 1 à 3,
**caractérisé en ce que** sur l'arbre d'entraînement (20) est logé un volant (37) faisant office d'unité d'actionnement.

5. Dispositif de blocage selon la revendication 4, **caractérisé en ce que** le volant (37) est relié par l'intermédiaire d'un accouplement à glissement (36, 53) avec l'arbre d'entraînement (20).

6. Dispositif de blocage selon la revendication 5, **caractérisé en ce que** l'accouplement à glissement comporte un moyeu (36) logé de manière solidaire en rotation sur l'arbre d'entraînement (20), auquel au moins un boulon de pression (53) est adjacent sous une force élastique.

7. Dispositif de blocage selon la revendication 6, **caractérisé en ce que** le boulon de pression (53) est adjacent à un méplat (55) sur l'enveloppe extérieure du moyeu (36).

8. Dispositif de blocage selon la revendication 7, **caractérisé en ce que** le méplat (55) est le fond inférieur d'un creux (57) sur l'enveloppe extérieure du moyeu (36).

9. Dispositif de blocage selon l'une quelconque des revendications 6 à 8, **caractérisé en ce que** la force élastique est réglable.

10. Dispositif de blocage selon l'une quelconque des revendications 6 à 9,
**caractérisé en ce que** le boulon de pression (53) est guidé de manière déplaçable dans un manchon de guidage (52) qui est se trouve dans le volant (37) et reçoit au moins un ressort de pression (54) à l'aide duquel le boulon de pression (53) est contraint en direction du moyeu (36).

11. Dispositif de blocage selon la revendication 10, **caractérisé en ce que** dans le manchon de guidage (52) est vissée une vis de réglage (56) pour le ressort de pression (54).

12. Utilisation d'un dispositif de blocage selon l'une quelconque des revendications 1 à 11 pour bloquer des outils de machines à usiner le bois, notamment des moulurières.
